**Europäisches Patentamt**

**European Patent Office**

**Office européen des brevets**

(19)

(11) Veröffentlichungsnummer : **0 045 381
B1**

# EUROPÄISCHE PATENTSCHRIFT

(12)

(45) Veröffentlichungstag der Patentschrift :
21.11.85

(21) Anmeldenummer : 81105217.4

(22) Anmeldetag : 04.07.81

(51) Int. Cl.⁴ : **G 01 S 1/46,** G 01 S 7/44,
G 01 R 25/00

(54) Sendeeinrichtung für ein Navigationssystem.

(30) Priorität : 01.08.80 DE 3029169

(43) Veröffentlichungstag der Anmeldung :
10.02.82 Patentblatt 82/06

(45) Bekanntmachung des Hinweises auf die Patenterteilung : 21.11.85 Patentblatt 85/47

(84) Benannte Vertragsstaaten :
DE FR GB IT NL

(56) Entgegenhaltungen :
DE-A- 2 543 294
DE-B- 2 518 127
GB-A- 1 321 968
SEL NACHRICHTEN, 16. Jahrgang, Heft 2, 1968,
Stuttgart, H. RÜCKARDT "Das Doppler-VOR-System"
Seiten 44-53

(73) Patentinhaber : International Standard Electric Corporation
320 Park Avenue
New York 10022 (US)

(72) Erfinder : Kleiber, Herbert
Georg-Kropp-Strasse 19
D-7140 Ludwigsburg (DE)
Erfinder : Idler, Horst
Schneckenbergstrasse 20
D-7000 Stuttgart 30 (DE)
Erfinder : Stammelbach, Jürgen
Neckartalstrasse 401
D-7000 Stuttgart 50 (DE)

(74) Vertreter : Graf, Georg Hugo, Dipl.-Ing. et al
c/o Standard Elektrik Lorenz AG Patent- und
Lizenzwesen Postfach 300 929 Kurze Strasse 8
D-7000 Stuttgart 30 (DE)

EP 0 045 381 B1

## Beschreibung

### Stand der Technik

Die Erfindung geht aus von einer Sendeeinrichtung wie im Oberbegriff des Anspruches 1 angegeben. Eine solche Sendeeinrichtung ist aus dem Aufsatz « Das Doppler — VOR — System » von H. Rüchardt, SEL-Nachrichten 16 (1968) Heft 2, Seiten 44 bis 53 bekannt. Im Abschnitt 2.1.2 ist die Phasenregelung zwischen den Ausgangssignalen beschrieben.

Bei manchen Navigationseinrichtungen werden von unterschiedlichen Antennen HF-Signale abgestrahlt, die sich im Funkfeld überlagern. Erst das durch die Überlagerung erzeugte Signal kann zur Ermittlung der Navigationsinformation verwendet werden.

Von einer Doppler — VOR — oder einer VOR — Bodenstation (VOR, VHF omnidirectional range) beispielsweise werden Träger- und Seitenbandsignale abgestrahlt. Durch die Überlagerung von Träger- und Seitenbandsignalen im Funkfeld erhält man ein Signal mit einer reinen Amplitudenmodulation, wobei dei Amplitude der resultierenden Schwingung vom Azimut abhängt.

Hierbei ist es besonders wichtig, daß zwischen dem Träger- und den Seitenbandsignalen eine konstante Phasendifferenz eingestellt wird und erhalten bleibt. Auch bei anderen Navigationssystemen, z. B. bei Instrumentenlandesystemen müssen zwischen verschiedenen Signalen Phasendifferenzen konstant gehalten werden.

Zur Regelung der Phasendifferenzen sind Phasenregelschaltungen bekannt. Die Phasenregelung an sich ist beispielsweise in dem Aufsatz « Phasensynchronisation von HF-Oszillatoren gleicher und dicht benachbarter Frequenzen », von K.D. Eckert, Internationale Elektronische Rundschau 21 (1967) Heft 6, Seiten 153-157, beschrieben.

Die bekannten Regeleinrichtungen zur Regelung der Phasendifferenz zwischen Träger- und Seitenbandsignalen erlauben nur dann eine präzise Konstantregelung, wenn der Seitenbandsender selbst eine große Stabilität aufweist. Es reicht dann nämlich aus, die Phase des Trägersignals in Bezug auf ein Referenzsignal konstant zu regeln. Dadurch, daß die Phase der hochfrequenten Trägerschwingung der Seitenbandsignale sich nach jeweils einer Halbperiode des niederfrequenten Modulationssignals um $\pi$ umkehrt, ist das Vorzeichen der Phasendifferenz bei den bekannten Phasenregeleinrichtungen nicht zu bestimmen. Dies ist jedoch für die Phasenregelung der Trägerschwingung des Seitenbandsignals notwendig.

### Aufgabe

Es ist die Aufgabe der Erfindung, eine Sendeeinrichtung für ein Navigationssystem anzugeben, bei der zwischen den Trägerschwingungen von mindestens zwei Navigationssignalen eine beliebige konstante Phasendifferenz eingestellt und aufrechterhalten werden kann.

### Lösung

Die Lösung dieser Aufgabe erfolgt mit den in Anspruch 1 angegebenen Mitteln. Eine vorteilhafte Weiterbildung ist im Anspruch 2 enthalten.

### Vorteile

Mit der neuen Sendeeinrichtung ist es auf einfache Weise möglich, zwischen mehreren Trägerschwingungen konstante, beliebige Phasendifferenzen aufrechtzuerhalten. Eventuell vorhandene Meßfehler beim Bestimmen der Phasendifferenz zwischen einer Trägerschwingung eines abzustrahlenden Navigationssignals und der Trägerschwingung eines Referenzsignals haben auf die Regelung einer konstanten Phasendifferenz zwischen den Trägerschwingungen der abzustrahlenden Signale keinen Einfluß, da sie für die einzelnen Messungen gleich sind und somit keine Auswirkung auf die konstant zu haltende Phasendifferenz haben.

Da die notwendigen Phasenmessungen im Zeitmultiplex durchgeführt werden, ist nur ein geringer gerätetechnischer Aufwand notwendig. Die Phasendifferenzen zwischen den Trägerschwingungen können auf beliebige Werte geregelt werden.

Gemäß einer Weiterbildung kann die Sendeeinrichtung so ausgestaltet sein, daß auch eine Amplitudenregelung der Sendesignale erfolgt.

### Beschreibung

Die Erfindung wird anhand eines Ausführungsbeispiels beispielsweise näher erläutert. Es zeigt :

Figur 1 ein Blockschaltbild des für die Erfindung wesentlichen Teils der Sendeeinrichtung

Figur 2 ein Blockschaltbild der Phasenmeßeinrichtung aus Fig. 1

Figur 3 a, b und c Diagramme zur Erläuterung der Regelung.

Bei der Sendeeinrichtung einer VOR-Bodenstation wird in einem Oszillator 1 die Trägerschwingung mit der Frequenz fo (fo liegt zwischen 108 MHz und 118 MHz) erzeugt, die in Modulationsverstärkern 4,15 mit 30 Hz bzw. mit Sprache, Kennung und dem Hilfsträger (dessen Frequenz 9 960 Hz) moduliert wird. Die modulierten Signale werden in Leistungsverstärkern 5,16 auf die Sendeleistung verstärkt und von Antennen 18, 19 abgestrahlt. Von der VOR-Bodenstation werden ein Trägersignal T und zwei Seitenbandsignale SB abgestrahlt. In der Beschreibung wird jedoch zur Vereinfachung nur auf ein Seitenbandsignal Bezug genommen. Dieses wird von der Antenne 19 abgestrahlt.

Dem Modulationsverstärker 4 im Seitenbandsignalzweig sind eine Phasenumtasteinrichtung 2 und ein steuerbarer Phasenschieber 3 vorgeschaltet. In der von einem Rechner 10 gesteuerten Phasenumtasteinrichtung wird die Phase der Trägerschwingung nach jeder Halbperiode des 30 Hz-Modulationssignals um $\pi$ verändert.

Dem Modulationsverstärker 15 im Trägersignalzweig ist ein steuerbarer Phasenschieber 14 vorgeschaltet. Die in dem Leitungszweig für das Trägersignal (und auch für die Seitenbandsigna-le) verwendeten Bauelemente haben fertigungs-bedingt geringfügig unterschiedliche Kennlinien und die im Leistungsverstärker erzeugte Verstärkung ist nicht immer gleich. Um trotzdem einen niedrigen Klirrfaktor zu erreichen, erfolgt bei der Trägersignalerzeugung eine Phasenregelung, die nur kurz erläutert wird, weil sie an sich bekannt ist.

Ein Richtkoppler 17 koppelt einen kleinen Anteil des Trägersignals T aus und führt ihn einem Mischer 13 zu, in dem es mit dem vom Oszillator 1 erzeugten Signal mit der Frequenz fo gemischt wird. Die Trägerschwingung mit der Frequenz fo ist das Referenzsignal. Das Mischsignal wird einem Regelverstärker 12 zugeführt, in dem seine Spannung mit einer Referenzspannung, z. B. null Volt, verglichen wird. Abhängig von dem Spannungsvergleich erzeugt der Regelverstärker ein Regelsignal, das den steuerbaren Phasenschieber 14 so steuert, daß zwischen den Trägerschwingungen des Trägersignals T und dem Referenzsignal fo eine Phasenverschiebung von $\pi/2$ eingehalten wird. Diese Phasenregelung erfolgt ständig unabhängig von der momentanen Modulationsspannung des Trägersignals.

Wie bereits erwähnt ist es wichtig, daß zwi-schen den Trägerschwingungen des Trä-gersignals und der Seitenbandsignale eine konstante Phasendifferenz eingehalten wird. Die hierzu vorgeschlagene Regelung wird nachfolgend erläutert.

Ein Teil des ausgekoppelten Trägersignals wird nicht nur dem Mischer 13 sondern auch einer Phasenmeßeinrichtung 11 zugeführt. Dieser Phasenmeßeinrichtung 11 wird außerdem ein Teil des Seitenbandsignals SB, der durch einen Richtkoppler 6 ausgekoppelt wird, und das Referenzsignal fo zugeführt.

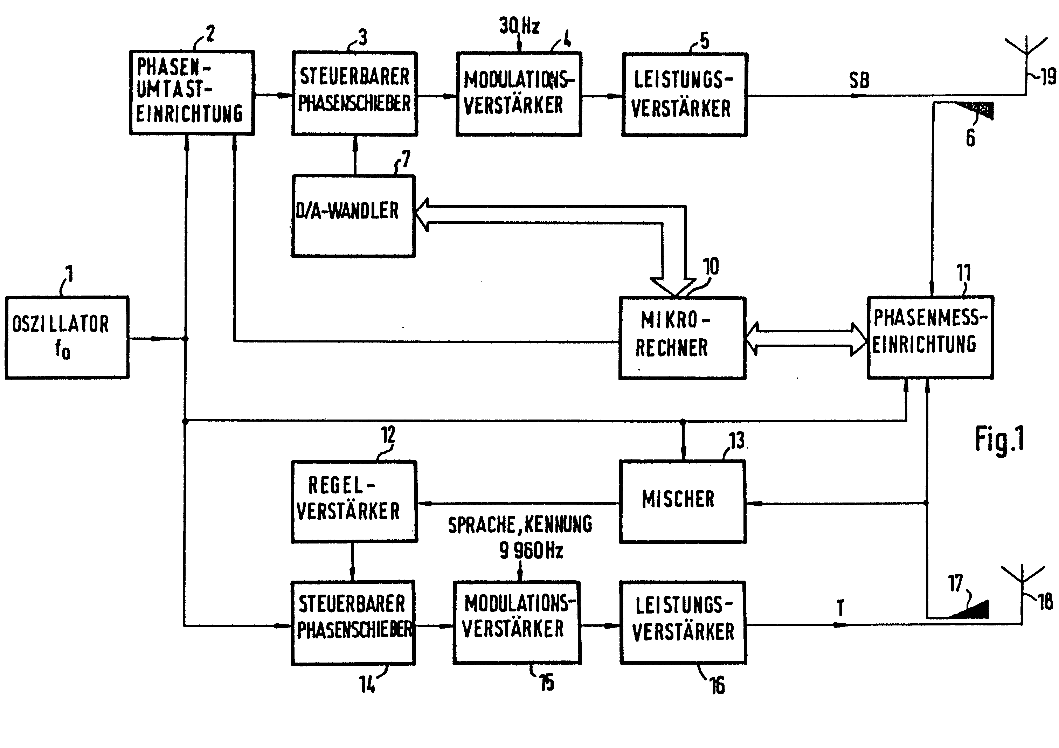

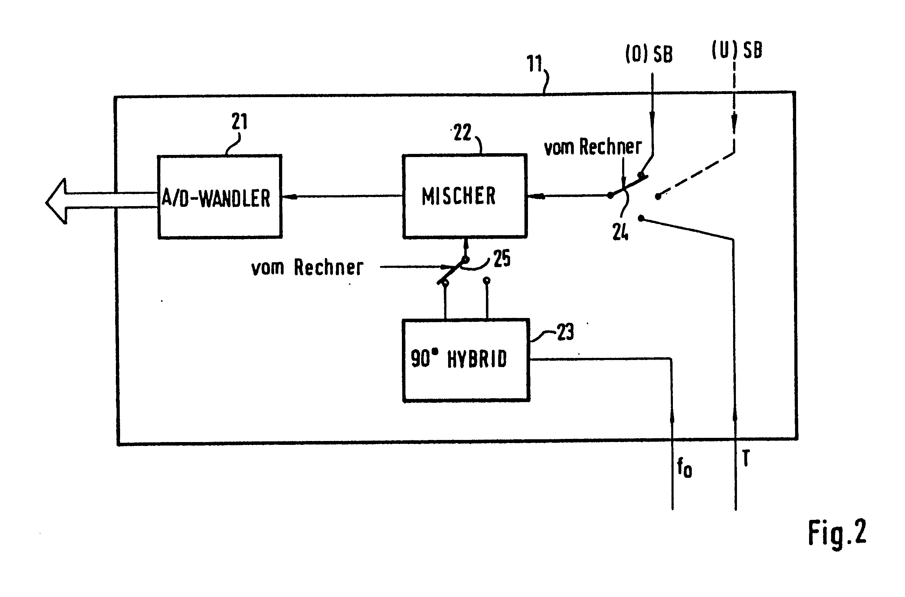

Die Phasenmeßeinrichtung 11 enthält, wie anhand der Fig. 2 näher erläutert wird, von einem Mikrorechner 10 (Fig. 1) gesteuerte Schalter 24, 25. Der erste Schalter 24 führt abwechselnd eines der Seitenbandsignale (O) SB, (U) SB (von denen in der Fig. 1 nur auf eines Bezug genommen wird) oder den Träger T einem Mischer 22 zu. Als weiteres Signal erhält der Mischer 22 das Referenzsignal fo, das ihm über ein 90° Hybrid 23 und den zweiten Schalter 25 zugeführt wird. Die Mi-scherausgangssignale werden einem Analog/Di-gital-Wandler 21 zugeführt.

Die Amplituden der Mischerausgangssignale sind Funktionen der Phasendifferenzen zwischen den Trägerschwingungen der Seitenbandsignale und des Trägersignals und dem Referenzsignal.

Dadurch, daß die Signale in dem Mischer 22 einerseits direkt mit dem Referenzsignal fo und andererseits mit dem um $\pi/2$ phasenverschobe-nen Referenzsignal fo gemischt werden, erhält man für jedes Seitenbandsignal und für das Trägersignal zwei Mischsignale, nämlich

$$S = U \sin\varphi$$

und

$$S' = U \cos\varphi$$

wobei

S, S' das Mischsignal,
U die Amplitude des Mischsignals, und $\varphi$ die Phasendifferenz zwischen dem Referenzsignal und den Trägerschwingungen der anderen, mit dem Referenzsignal gemischten Signale ist.

Durch die Bildung des Quotienten S/S' erhält man tan $\varphi$ und somit auch die zu bestimmende Phasendifferenz $\varphi$.

Da beide Schalter 24 und 25 von dem Rechner 10 gesteuert werden, ist im Rechner 10 bekannt, welche Signale miteinander gemischt werden. Es ist eine eindeutige Zuordnung möglich.

Die Quotientenbildung S/S' erfolgt im Rechner 10. In der weiteren Beschreibung wird wieder, wie bereits zu Beginn der Beschreibung, nur noch auf ein Seitenbandsignal Bezug genommen.

In dem Rechner 10 sind folgende Phasendiffe-renzen bekannt:

$$\Delta\varphi_1 = \varphi_{SB} - \varphi \text{ Referenz}$$
$$\Delta\varphi_2 = \varphi_T - \varphi \text{ Referenz}$$

Daraus läßt sich die Differenz $\Delta\varphi$ zwischen den Phasen der Trägerschwingungen von Seitenbandsignal und Trägersignal berechnen, die auf einen konstanten Wert geregelt werden soll.

$$\Delta\varphi = \Delta\varphi_1 - \Delta\varphi_2$$

Die Schwankung der Phasendifferenz erfolgt sehr langsam. Man kann daher bei der Berechnung der Regelwerte, mit denen der steuerbare Phasenschieber 3 über einen D/A-Wandler 7 gesteuert wird, wie folgt vorgehen.

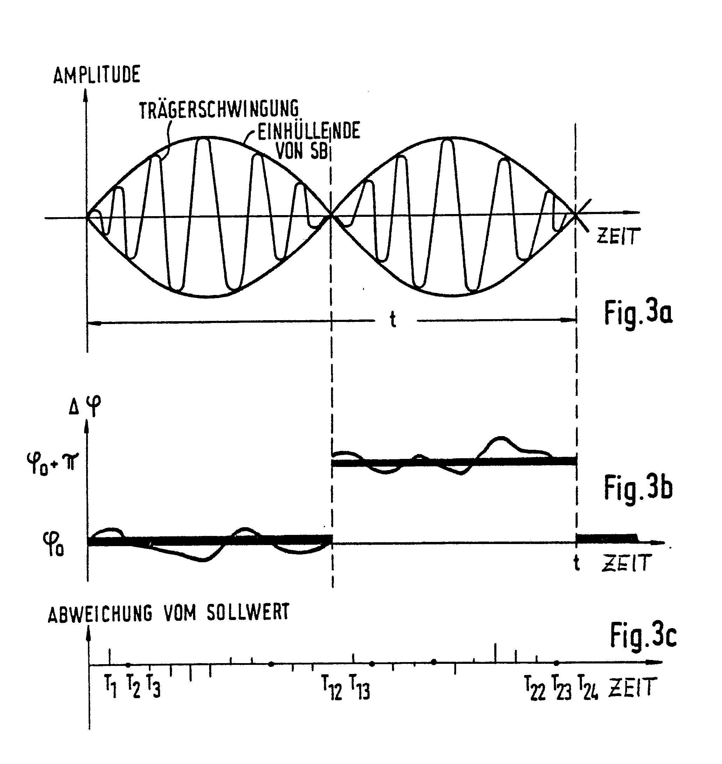

Die Regelung erfolgt über mehrere Signalperioden t hinweg. In der Fig. 3a sind für eine Signalperiode t die Einhüllende und die Trägerschwingung des Seitenbandsignals dargestellt. Nach t/2 erfolgt ein Phasensprung von $\pi$. Während der ersten Hälfte einer Signalperiode ist die Phasendifferenz zwischen den Trägerschwingungen von Träger- und Seitenbandsignal $\varphi_0$; während der zweiten Hälfte ist sie $\varphi_0 + \pi$. Die Sollwerte sind in der Fig. 3b durch dick ausgezogen gezeichnete Linien dargestellt. Die dünn gezeichneten Linien geben die gemessenen Phasendifferenzen an. Während jeder Signalperiode wird an einer bestimmten Stelle innerhalb einer Modulationssignalperiode (die Stelle ändert sich von Messung zu Messung) die Differenz zwischen dem gemessenen Wert und dem in einem Speicher gespeicherten Wert gemessen. Abhängig von der gemessenen Abweichung wird ein Korrekturwert berechnet und gespeichert. Dies geschieht im vereinfachten Beispiel der Fig. 3c 24 mal und es werden hierzu 24 Signalperioden benötigt. Der Rechner steuert dann den steuerbaren Phasenschieber 3 so, daß solche Phasenverschiebungen erzeugt werden, daß die Differenz zwischen gemessenem Wert und Sollwert zu null ausgeregelt wird. Ändert sich im Laufe der Zeit die Phasendifferenz erneut, dann werden die gespeicherten Regelwerte durch neue Regelwerte ersetzt. Im dargestellten Beispiel wird der steuerbare Phasenschieber 3 während einer Modulationssignalperiode 24 mal mit neuen Regelwerten gesteuert. Der Aufbau des Mikrorechners und seine Steuerung (z. B. die Steuerung des Auslesens von gespeicherten und des Einschreibens von neuen Werten) werden hier nicht näher erläutert, da sie dem Fachmann bekannt sind.

Die Sendeeinrichtung kann leicht so ergänzt werden, daß zusätzlich die Amplituden von Seitenbandsignalen und Trägersignal gemessen werden. Der Rechner kann dann so gestaltet sein, daß er die gemessenen Werte mit Sollwerten vergleicht und abhängig vom Vergleich Regelwerte erzeugt, mit denen der Verstärkungsgrad des Leistungsverstärkers geregelt wird.

**Patentansprüche**

1. Sendeeinrichtung für ein Navigationssystem, von der mindestens zwei Navigationssignale (T, SB) abgestrahlt werden, wobei die Phasen der Trägerschwingungen der Navigationssignale (T, SB) in einer festen Relation zueinander stehen, mit mindestens zwei Auskoppeleinrichtungen (6, 17) zur Auskopplung von jeweils einem Teil der Navigationssignale, einem Mischer (22), in dem die ausgekoppelten Navigationssignale (T, SB) mit einem Referenzsignal (fo) gemischt werden, und einem Phasenschieber (3), der abhängig von der Phasenverschiebung die Phase von mindestens einer Trägerschwingung eines Navigationssignals (SB) regelt, dadurch gekennzeichnet, daß dem Mischer (22) einerseits im Zeitmultiplex die Navigationssignale (T, SB) und andererseits das Referenzsignal (fo) zugeführt werden, wobei das Referenzsignal (fo) dem Mischer abwechselnd direkt und um $\pi/2$ phasenverschoben zugeführt wird, daß die durch Mischen erzeugten Mischerausgangssignale digitalisiert und einem Rechner (10) zugeführt werden, der zur Bestimmung der Phasenverschiebungen der Trägerschwingungen des einen (T) und des anderen (SB) Navigationssignals gegenüber der Trägerschwingung des Referenzsignals (fo) die Quotienten der Spannungen der durch Mischen mit dem direkten und dem um $\pi/2$ phasenverschobenen Referenzsignal (fo) erzeugten Signale bildet, daß der Rechner (10) aus diesen Phasenverschiebungen die Phasendifferenz zwischen den Trägerschwingungen des einen (T) und des anderen (SB) Navigationssignals berechnet und mit einem vorgegebenen Sollwert vergleicht, und daß abhängig von diesem Vergleich ein Regelwert zur Steuerung des steuerbaren Phasenschiebers (3), der die Phase der Trägerschwingung des anderen Navigationssignals (SB) regelt, ermittelt und diesem zugeführt wird.

2. Sendeeinrichtung nach Anspruch 1, dadurch gekennzeichnet, daß eine weitere Meßeinrichtung zur Messung der Amplituden des einen (T) und des anderen (SB) Navigationssignals vorgesehen ist, daß die gemessenen Amplituden in dem Rechner mit Sollwerten verglichen werden und daß abhängig von diesem Vergleich Regelwerte zur Regelung der Amplituden ermittelt und einer Amplitudenregeleinrichtung zugeführt werden.

**Claims**

1. Transmitter device for a navigation system which radiates at least two navigation signals (T, SB), with the phases of the carrier waves of the navigation signals (T, SB) having a fixed relationship to each other, comprising at least two couplers (6.17) for extracting part of the navigation signals, a mixer (22) in which the extracted navigation signals (T, SB) are mixed with a reference signal (fo) and a phase shifter (3) which controls the phase of at least one carrier wave of a navigation signal (SB) depending upon the phase shift, characterized in that the mixer (22) is fed with on the one hand the navigation signals (T, SB), employing time-division multiplexing, and on the other hand the reference signal (fo), which is applied alternately direct and phase-shifted by $\pi/2$, that the mixer output signals obtained by mixing are digitized and fed to a computer (10), which, in order to determine the phase shifts of the carrier waves of the first (T) and second (SB) navigation signals in relation to the carrier wave of the reference signal (fo), forms the quotients of the voltages of the signals obtained by mixing with the direct reference signal (fo) and the reference signal (fo) phase-shifted by $\pi/2$, that the computer (10) calculates from these phase shifts the phase difference between the carrier waves of the first navigation signal (T) and the second navigation signal (SB) and compares it with a prescribed desired value and that on the basis of this comparison a control quantity for controlling the controllable phase shifter (3), which controls the phase of the carrier wave of the second navigation signal (SB), is determined and applied to this phase shifter.

2. A transmitter as claimed in Claim 1, characterized in that a further measuring device is provided for measuring the amplitudes of the first navigation signal (T) and the second navigation signal (SB), that the measured amplitudes are compared with desired values in the computer and that, on the basis of this comparison, control quantities for controlling the amplitudes are determined and applied to an amplitude controller.

**Revendications**

1. Emetteur destiné à un système de navigation qui émet au moins deux signaux de navigation (T, SB), la relation entre les phases des ondes porteuses des signaux de navigation (T, SB) étant fixe, comprenant au moins deux découpleurs (6, 17) permettant de découpler une partie de chaque signal de navigation, un mélangeur (22) dans lequel les signaux de navigation découplés (T, SB) sont mélangés avec un signal de référence (fo), et un déphaseur (3) chargé de régler la phase d'au moins une onde porteuse d'au moins un des signaux de navigation (SB) en fonction du décalage de phase, caractérisé en ce que le mélangeur (22) reçoit d'une part les signaux de navigation (T, SB) en multiplexage à partage du temps et d'autre part le signal de référence (fo), le signal de référence (fo) étant envoyé au mélangeur alternativement, directement ou décalé en phase de π/2, en ce que les signaux de sortie du mélangeur obtenus par mélange sont numérisés et envoyés à un calculateur (10) qui, pour déterminer les décalages de phase des ondes porteuses de l'un (T) et de l'autre (SB) des signaux de navigation par rapport à l'onde porteuse du signal de référence (fo), calcule le quotient entre les tensions des signaux obtenus par mélange avec le signal de référence (fo) direct et avec le signal de référence (fo) décalé en phase de π/2, en ce que le calculateur (10) calcule à partir desdits décalages de phase la différence de phase entre les ondes porteuses de l'un (T) et de l'autre (SB) signal de navigation et la compare à une valeur de consigne prédéterminée, et en ce que, en fonction du résultat de cette comparaison, une valeur de réglage servant à commander le déphaseur réglable (3) chargé de régler la phase de l'onde porteuse de l'autre signal de navigation (SB) est déterminée et envoyée audit déphaseur.

2. Emetteur selon la revendication 1, caractérisé en ce qu'il est de plus prévu un dispositif de mesure permettant de mesurer l'amplitude de l'un (T) et de l'autre (SB) des signaux de navigation, en ce que les amplitudes mesurées sont comparées dans l'ordinateur à des valeurs de consigne, et en ce que, en fonction de cette comparaison, des valeurs de réglage permettant de régler les amplitudes sont déterminées et envoyées à un dispositif de réglage d'amplitude.

Fig.1

Fig.2

AMPLITUDE

TRÄGERSCHWINGUNG

EINHÜLLENDE VON SB

ZEIT

t

Fig.3a

$\Delta\varphi$

$\varphi_0 + \pi$

$\varphi_0$

t   ZEIT

Fig.3b

ABWEICHUNG VOM SOLLWERT

Fig.3c

$T_1$ $T_2$ $T_3$          $T_{12}$ $T_{13}$          $T_{22}$ $T_{23}$ $T_{24}$ ZEIT